# EUROPEAN PATENT APPLICATION

(11) **EP 4 648 181 A1**
(43) Date of publication of application: **12.11.2025**
(21) Application number: 24823554.1
(22) Date of filing: 18.04.2024
(51) Int. Cl.: H01M 10/658, H01M 10/613, H01M 10/6557, H01M 50/502

(54) **BATTERY MODULE AND BATTERY PACK INCLUDING SAME**

(30) Priority: 15.06.2023 KR 20230076754
(71) Applicant: LG Energy Solution, Ltd., Seoul 07335 (KR)
(72) Inventor: LEE, Jung Hoon, Daejeon 34122 (KR); YUN, Hyeonki, Daejeon 34122 (KR); KIM, Hyun Jung, Daejeon 34122 (KR); UM, Taeki, Daejeon 34122 (KR)
(74) Representative: Plasseraud IP
(86) International application number: PCT/KR2024/005257
(87) International publication number: WO 2024/258033

(57) **Abstract**

The present disclosure includes a battery module and a battery pack including the same. A battery module according to an embodiment of the present disclosure includes: a first sub-module and a second sub-module each including a battery cell stack in which a plurality of battery cells are stacked, and a busbar assembly including a busbar electrically connected to the battery cell stack and a busbar frame covering the battery cell stack on at least one side; a module frame in which the first sub-module and the second sub-module are housed; and a flame preventing member located between the first sub-module and the second sub-module, wherein one end of the first sub-module and the other end of the second sub-module are electrically connected to each other.

## Description

### [TECHNICAL FIELD]

### Cross Citation with Related Application(s)

This application claims the benefit of Korean Patent Application No. 10-2023-0076754 filed on June 15, 2023 with the Korean Intellectual Property Office, the disclosure of which is incorporated herein by reference in its entirety.

The present disclosure relates to a battery module and a battery pack including the same, and more particularly, to a battery module with improved cooling performance deviation and safety inside the battery module, and a battery pack including the same.

### [BACKGROUND]

With technology development of mobile devices, and an increase in demand therefor, demand for secondary batteries as energy sources has been rapidly increasing. A lot of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Therefore, in order to overcome the above problems, at least two sub-modules may be electrically connected to form one long module, and a coolant such as insulating oil may be injected into the long module to directly cool the battery cells. Herein, the sub-module is a module in which a busbar assembly is mounted on a battery cell stack, and may mean components excluding the module frame in a conventional general battery module.

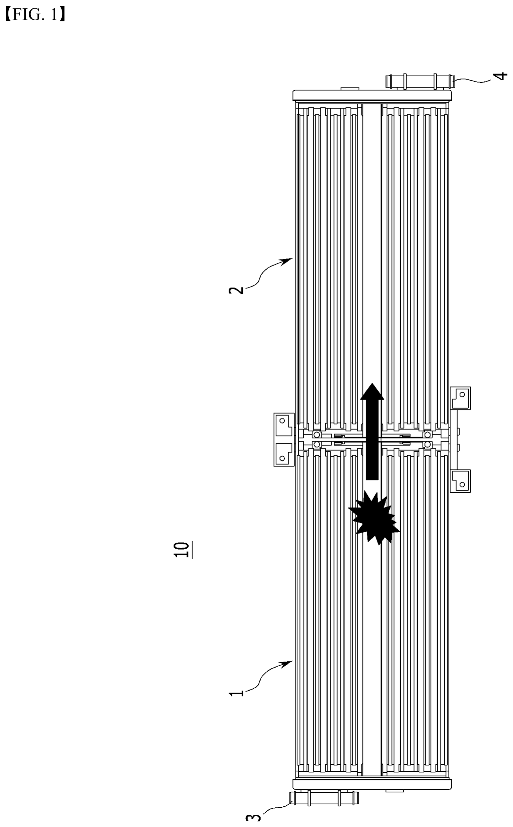

FIG. 1 is a perspective view illustrating a long module, which is a conventional battery module.

Referring to FIG. 1, a long module 10, which is a conventional battery module, includes a first sub-module 1 and a second sub-module 2.

Specifically, a coolant flows into the long module 10 via an inlet 3, sequentially passes through the first sub-module 1 and the second sub-module 2, and then discharges to the outside via an outlet 4, thereby capable of cooling the long module 10. In this case, the overall length of the long module 10 is longer than that of a conventional general battery module, and the coolant cools the first sub-module 1 preferentially, and then cools the second sub-module 2, so that a temperature difference may occur between the first sub-module 1 and the second sub-module 2.

In addition, the coolant moving in the inside of the long module 10 moves through one flow path as a whole, and therefore, when a flame occurs in the first sub-module 1, the flame may propagate to the adjacent second sub-module 2 by the coolant, which causes a problem that the possibility of explosion of the battery increases and the safety of the battery is reduced.

### [DETAILED DESCRIPTION OF THE INVENTION]

### [Technical Problem]

It is an object of the present disclosure to provide a battery module with improved cooling performance deviation and safety, and a battery pack including the same.

However, the problem to be solved by embodiments of the present disclosure is not limited to the above-mentioned problems, and can be variously expanded within the scope of the technical idea included in the present disclosure.

### [Technical Solution]

According to an embodiment of the present disclosure, there is provided a battery module comprising: a first sub-module and a second sub-module each including a battery cell stack in which a plurality of battery cells are stacked; a module frame in which the first sub-module and the second sub-module are housed; and a flame preventing member located between the first sub-module and the second sub-module, wherein one end of the first sub-module and the other end of the second sub-module are electrically connected to each other.

The flame preventing member may comprise a first flame preventing member located while being in contact with a lower surface of the module frame, and a second flame preventing member located while being in contact with an upper surface of the module frame.

The first flame preventing member and the second flame preventing member may be coupled and located while being engaged with each other.

The first flame preventing member may comprise a first plate in contact with the lower surface of the module frame, and a first insulating member located while covering an outer peripheral surface of the first plate, and the second flame preventing member may comprise a second plate in contact with the upper surface of the module frame, and a second insulating member located while covering the outer peripheral surface of the second plate.

The first insulating member may comprise a first recessed part, which is one area where one surface of the first insulating member is recessed, and a first protrusion part, which is one area of the first insulating member that is protruded compared to the first recessed part, and the second insulating member may comprise a second recessed part, which is one area where one surface of the second insulating member is recessed, and a second protrusion part, which is one area of the second insulating member that is protruded compared to the second recessed part.

A first area where the first recessed part and the first protrusion part are located, may be inserted and located in the second area where the second recessed part and the second protrusion part are located.

The first protrusion part may be located while being in contact with the second protrusion part and the second recessed part.

The first recessed part may be located while maintaining a prescribed distance from the second protrusion part and the second recessed part.

A movement path through which a coolant moves is formed between the first recessed part, the second protrusion part and the second recessed part.

The movement path may correspond to the shape of the first recessed part.

The first plate may include a first support plate located while being in contact with the lower surface of the module frame, and a first prevention plate protruded in a surface perpendicular to the first support plate, the first prevention plate may include one end in contact with the first support plate, and the other end extended therefrom, and the first recessed part and the first protrusion part may be provided in an area which is closer to the other end of the first prevention plate than the one end of the first prevention plate.

The second plate may include a second support plate located while being in contact with the upper surface of the module frame, and a second prevention plate protruded in a surface perpendicular to the second support plate, the second prevention plate may include one end in contact with the second support plate, and the other end extended therefrom, and the second recessed part and the second protrusion part may be provided in a second area which is an area closer to the other end of the second prevention plate than one end of the second prevention plate.

The first recessed parts may be formed in plurality and spaced apart from each other with the first protrusion part therebetween.

The first recessed part and the first protrusion part have a protrusion structure, wherein the first protrusion part may function as a protrusion.

The second recessed part is located between the two second protrusion parts, and the second protrusion part extends in a direction away from the second recessed part, so that the thickness of the second insulating member may become thinner.

The first recessed part may include an area where the first plate is partially exposed.

The first sub-module and the second sub-module may further comprise a busbar assembly including a busbar electrically connected to the battery cell stack and a busbar frame covering the battery cell stack on at least one side.

According to another embodiment of the present disclosure, there is provided a battery pack comprising the above-mentioned battery module.

### [Advantageous Effects]

According to embodiments, the cooling performance deviation of a battery can be improved and the safety can be enhanced.

Effects of the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a perspective view illustrating a long module, which is a conventional battery module.
FIG. 2 is a perspective view of a battery pack according to an embodiment of the present disclosure.
FIG. 3 is an exploded perspective view of the battery pack of FIG. 2.
FIG. 4 is a perspective view of a battery module according to an embodiment of the present disclosure.
FIG. 5 is an exploded perspective view of the battery module of FIG. 4.
FIG. 6 is a perspective view of a battery module according to an embodiment of the present disclosure.
FIG. 7 is a perspective view of the battery module excluding the module frame of FIG. 5.
FIG. 8 is a diagram illustrating a movement path of current in a battery module according to an embodiment of the present disclosure.
FIG. 9 is an exploded perspective view of a sub-module according to an embodiment of the present disclosure.
FIG. 10 is a perspective view of a flame preventing member according to an embodiment of the present disclosure.
FIG. 11 is a perspective view of a first flame preventing member according to an embodiment of the present disclosure.
FIG. 12 is a diagram illustrating section A1 of FIG. 11.
FIG. 13 is a perspective view of a second flame preventing member according to an embodiment of the present disclosure.
FIG. 14 is a cross-sectional view taken along line B-B' of FIG. 10.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

The terms first, second, etc. may be used herein to describe various components, but the components are not to be limited by the terms. The terms may only be used for the purpose of distinguishing one component from another.

Further, in this application, the upper part and the lower part may be defined as meaning the z-axis direction and the -z-axis direction, the side surface as meaning the y-axis direction and the -y-axis direction, and the front surface and the rear surface as meaning the x-axis direction and the -x-axis direction, respectively. However, these names are arbitrarily defined within the specification for convenience, and the scope of rights is not limited to such names and directions.

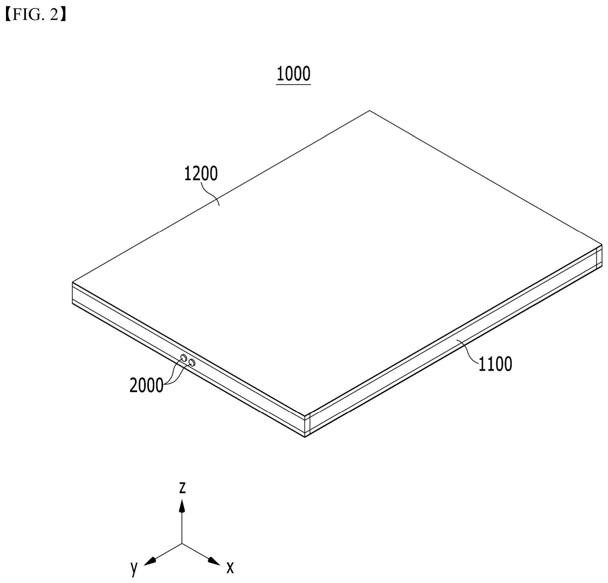

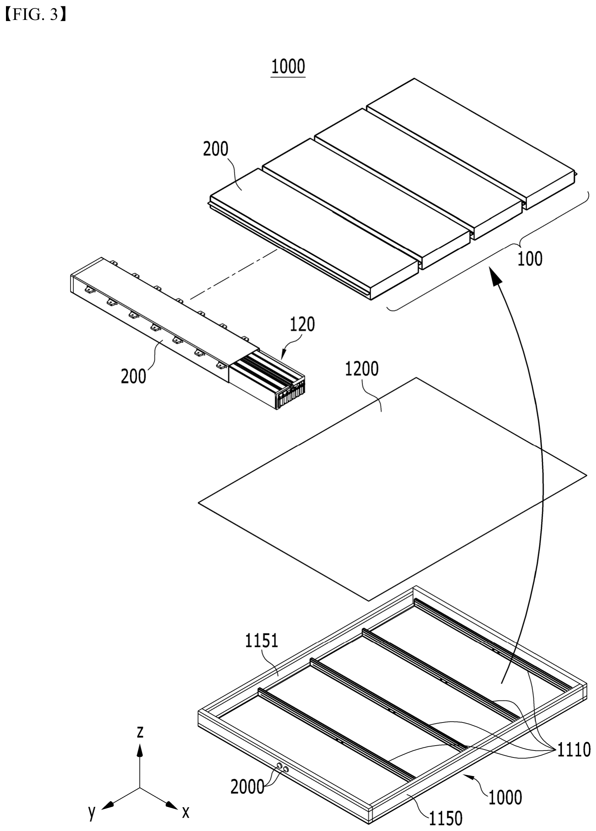

FIG. 2 is a perspective view of a battery pack according to an embodiment of the present disclosure. FIG. 3 is an exploded perspective view of the battery pack of FIG. 2.

Referring to FIGS. 2 and 3, a battery pack 1000 according to an embodiment of the present disclosure comprises a lower pack frame 1100 on which a plurality of battery modules 100 are mounted, an upper pack frame 1200 located at an upper part of the battery module 100, and at least one venting part 2000 provided on a side surface of the lower pack frame 1100. Herein, the lower pack frame 1100 and the upper pack frame 1200 may be joined to each other by a method such as welding to seal the inside of the battery pack 1000.

The battery module 100 may include a battery cell stack 120 in which a plurality of battery cells are stacked along a preset direction, and a module frame 200. The module frame 200 may be a mono frame in a metal plate shape in which the upper and lower surfaces (z-axis direction and -z-axis direction) and both side surfaces (y-axis direction and -y-axis direction) are integrated. The battery cell stack 120 may be mounted inside the module frame 200 to form the battery module 100.

The lower pack frame 1100 includes a side pack frame 1150 and at least two internal beams 1110 formed on the bottom surface of the lower pack frame 1100. Here, the bottom surface of the lower pack frame 1100 and the at least two internal beams 1110, and the bottom surface of the lower pack frame 1100 and the side pack frame 1150 may be joined to each other by a method such as welding.

A plurality of battery modules 100 may be mounted to an area partitioned from each other by a side pack frame 1150 and at least two internal beams 1110. In other words, a plurality of battery modules 100 may be respectively arranged in an area between the side pack frame 1150 and the internal beams 1110, and an area located between the internal beams 1110 adjacent to each other. More specifically, in the battery pack 1000, a battery module 100 may be arranged between a pair of internal beams 1110 located adjacent to each other among the plurality of internal beams 1110 and the side pack frame 1150.

Accordingly, the plurality of battery modules 100 are surrounded by at least two internal beams 1110 and the side pack frame 1150, so that each battery module 100 can be protected from external impacts.

The side pack frame 1150 may be arranged at the edge of the bottom surface of the lower pack frame 1100, and may be extended to an upper part (in the z-axis direction) from the bottom surface of the lower pack frame 1100. More specifically, it may be extended toward the upper part from each edge of the bottom surface of the lower pack frame 1100. Herein, the upper end of the side pack frame 1150 may be in contact with the upper pack frame 1200. At this time, the upper end of the side pack frame 1150 and the upper pack frame 1200 may be joined to each other by a method such as welding, thereby sealing the inside of the battery pack 1000.

The plurality of internal beams 1110 may be spaced apart from each other. Herein, the separation distance between internal beams 1110 adjacent to each other may be equal to or greater than the size of the battery module 100.

Further, the end of the internal beam 1110 may be in contact with the inner surface 1151 of the side pack frame 1150. More specifically, both ends of the internal beam 1110 may be in contact with the inner surface 1151 of the side pack frame 1150, respectively.

Next, a battery module 100 according to an embodiment of the present disclosure will be described in detail.

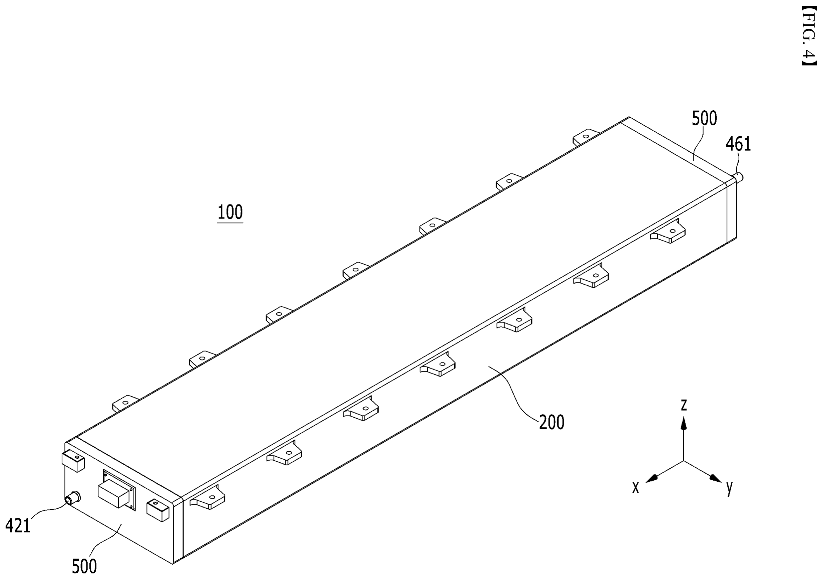

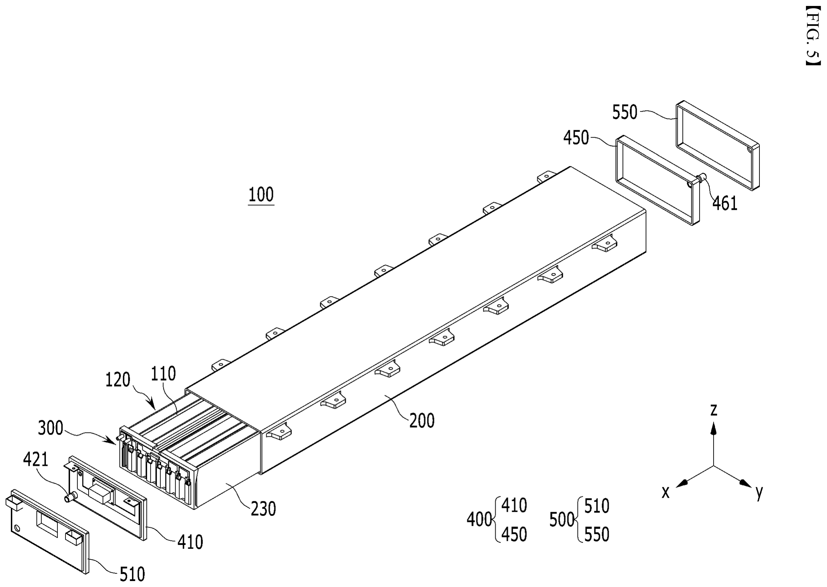

FIG. 4 is a perspective view of a battery module according to an embodiment of the present disclosure. FIG. 5 is an exploded perspective view of the battery module of FIG. 4.

Referring to FIGS. 4 and 5, the battery module 100 according to an embodiment of the present disclosure may be a module in which conventional general battery modules are electrically connected to each other to form one battery module 100. Specifically, the battery module 100 of the present embodiment may be a module in which one end and the other end of each battery cell stack constituting two conventional battery modules are electrically connected.

The battery module 100 comprises a battery cell stack 120 in which a plurality of battery cells 110 are stacked, a module frame 200 that houses the battery cell stack 120, a busbar assembly 300 located on a front surface and/or a rear surface of the battery cell stack 120, a sealing assembly 400 that covers a front surface and/or a rear surface of the busbar assembly 300, and an end plate 500 that covers a front surface and/or a rear surface of the sealing assembly 400.

First, the battery cell 110 may be a pouch-type battery cell. Such a pouch-type battery cell may be formed by housing an electrode assembly in a pouch case made of a laminate sheet including a resin layer and a metal layer, and then heat-fusing a sealing part of the pouch case. In this case, the battery cell 110 may be formed in a rectangular sheet-like structure.

Such battery cells 110 may be configured in a plurality of numbers, and the plurality of battery cells 110 are stacked so as to be electrically connected to each other, thereby forming a battery cell stack 120. In particular, a plurality of battery cells 110 may be stacked along a direction parallel to the y-axis as shown in FIG. 5.

The module frame 200 can be intended to protect the battery cell stack 120 and the electrical components connected thereto from external physical impacts. The module frame 200 may house the battery cell stack 120 and the electrical components connected thereto in the internal space of the module frame 200.

The structure of the module frame 200 may have various shapes. According to the present figure, the structure of the module frame 200 may be a mono frame structure. The mono frame can be manufactured by extrusion molding.

However, the structure of the module frame 200 is not limited thereto, and in another example, the module frame 200 may have a structure in which a U-shaped frame and an upper plate are coupled. In this case, the U-shaped frame may be formed such that the lower surface and both side surfaces of the module frame 200 are coupled and integrated. At this time, each frame or plate constituting the U-shaped frame may be manufactured by press molding. Further, the structure of the module frame 200 may be provided in a mono frame or an L-shaped frame structure in addition to a U-shaped frame, and may be provided in various structures that are not described in the above-mentioned examples.

The module frame 200 may be provided in a shape opened along the longitudinal direction (x-axis direction) of the battery cell stack 120. In this case, the front surface (x-axis direction) and the rear surface (-x-axis direction) of the battery cell stack 120 may be not hidden by a module frame 200. The front surface and the rear surface of the battery cell stack 120 may be hidden by a busbar assembly 300, a sealing assembly 400, or an end plate 500, etc., through which the front surface (x-axis direction) and the rear surface (-x-axis direction) of the battery cell stack 120 will be able to be protected from external physical impacts or the like.

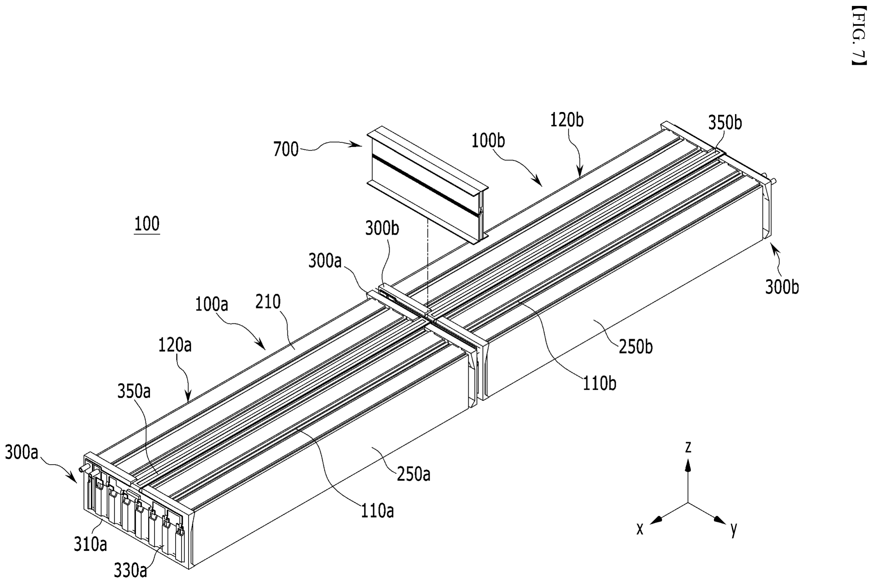

The busbar assembly 300 includes a busbar frame 310 described below, and a busbar 330 (FIG. 7) mounted on one surface of the busbar frame 310 (FIG. 7). The busbar assembly 300 may be located on the opened first side (x-axis direction) and second side (-x-axis direction) of the module frame 200 to cover the battery cell stack 120. The busbar assembly 300 can electrically connect the battery cells 110 constituting the battery cell stack 120 in series or in parallel.

The busbar assembly 300 may include a busbar frame 310 (FIG. 7) and a busbar 330 (FIG. 7), and the details thereof will be described later.

The sealing assembly 400 may be located on the opened first side (x-axis direction) and second side (-x-axis direction) of the module frame 200 to cover the battery cell stack 120. The sealing assembly 400 located on the opened first side of the module frame 200 may be a first sealing assembly 410, and the sealing assembly 400 located on the opened second side of the module frame 200 may be a second sealing assembly 450.

The sealing assembly 400 may separate the opened first side and second side of the module frame 200 from the external environment. Specifically, when a coolant is injected into the module frame 200, the sealing assembly 400 may perform the function to seal the coolant so as to prevent it from leaking to the outside.

Specifically, the sealing assembly 400 may include a sealing cover and an inlet 421 through which coolant flows in and an outlet 461. Specifically, the coolant may flow into the module frame 200 via the inlet 421, and then be discharged to the outside of the battery module 100 via the outlet 461. The coolant may be in direct contact with the battery cell stack 120, other electrical components, and the busbar assembly 300 mounted inside the module frame 200, and receive transfer of heat generated therefrom. Therefore, the coolant can cool the battery module 100 while circulating inside the battery module 100.

The coolant may be a fluid. However, the coolant needs to be electrically insulated because it is in direct contact with the battery cell stack 120, other electrical components, and the busbar assembly 300 within the battery module 100. Therefore, the coolant may be a material that has insulating properties. In one example, the coolant may be insulating oil.

As mentioned above, the coolant is in direct contact with the battery cell stack 120, other electrical components, and the busbar assembly 300 that generate heat within the battery module 100, and can directly cool them while receiving transfer of heat. Therefore, as compared to the conventional method of indirectly cooling the battery module using a heat sink, etc., the cooling efficiency of the battery can be improved, and thus the battery life can be extended.

The end plate 500 may be located on the opened first side (x-axis direction) and the second side (-x-axis direction) of the module frame 200, and formed to cover the sealing assembly 400. The end plate 500 located on the opened first side of the module frame 200 may be a first end plate 510, and the end plate 500 located on the opened second side of the module frame 200 may be a second end plate 550.

Such an end plate 500 may physically protect the battery cell stack 120 and other electrical components from external impacts.

Next, each sub-module constituting the battery module 100 of the present embodiment will be described in more detail.

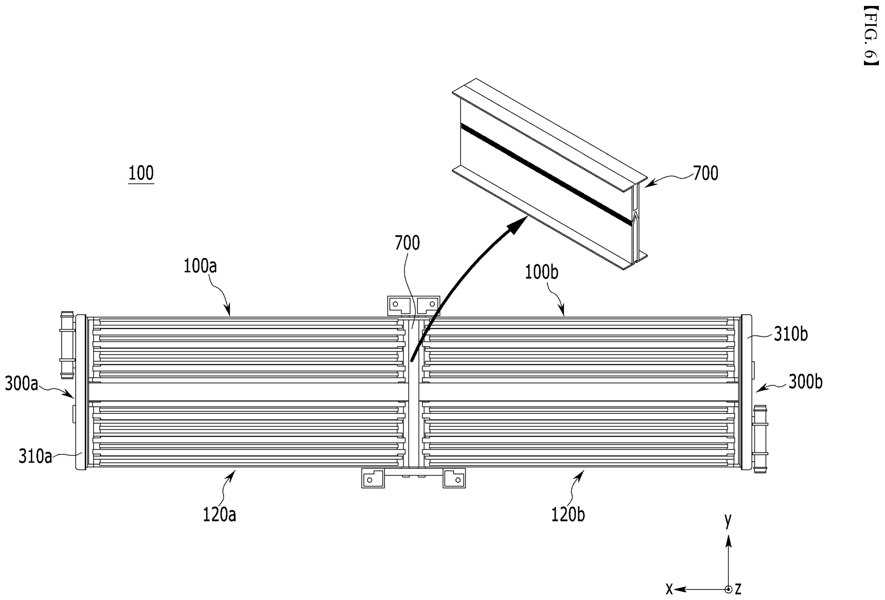

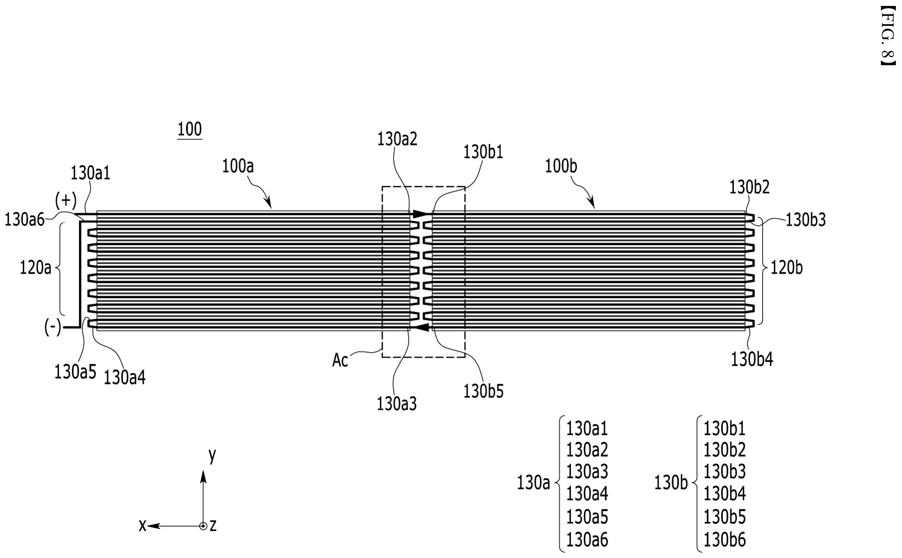

FIG. 6 is a perspective view of a battery module according to an embodiment of the present disclosure. FIG. 7 is a perspective view of the battery module excluding the module frame of FIG. 5. FIG. 8 is a diagram illustrating a movement path of current in a battery module according to an embodiment of the present disclosure.

Referring to FIGS. 6 and 7, the battery module 100 according to an embodiment of the present disclosure may include a first sub-module 100a, a second sub-module 100b, and a flame preventing member 700. Herein, the battery module 100 may be a module in which a first sub-module 100a and a second sub-module 100b are electrically connected to each other.

The first sub-module 100a and the second sub-module 100b may each include battery cell stacks 120a and 120b in which a plurality of battery cells are stacked, and busbar assemblies 300a and 300b including a busbar 330a electrically connected with the battery cell stacks 120a and 120b and a busbar frame 310a covering the battery cell stacks 120a and 120b on at least one side.

That is, the first sub-module 100a and the second sub-module 100b each include the same configuration.

The flame preventing member 700 can prevent a flame from propagating to the second sub-module 100b when the flame occurs in the first sub-module 100a.

Specifically, the flame preventing member 700 can be located between the first sub-module 100a and the second sub-module 100b. The flame preventing member 700 is located between the other end (-x-axis direction) of the first sub-module 100a and one end (x-axis direction) of the second sub-module 100b, thereby allowing only the coolant to move from the first sub-module 100a to the second sub-module 100b, and preventing the movement of flames, and the like.

Referring to FIG. 8, the area where the first sub-module 100a and the second sub-module 100b are electrically connected can be defined as a connection area Ac. The connection structure and current flow of the electrode leads 130a and 130b at one end of the first sub-module 100a, the other end of the second sub-module 100b, and the connection area Ac will be described in detail below.

The first outermost electrode lead 130a1 located at one end of the first sub-module 100a and the first electrode lead 130a6 located adjacent thereto are electrically connected to the outside so that current can be supplied to the first sub-module 100a and the second sub-module 100b. In this case, current is supplied to the first submodule 100a from the outside, however, since the first electrode lead 130a and the second electrode lead 130b are electrically connected in the connection area Ac, current can also flow to the second sub-module 100b.

In the connection area Ac, a first electrode lead 130a located at the outermost part of the first battery cell stack 120a of the first sub-module 100a and a second electrode lead 130b located at the outermost part of the second battery cell stack 120b of the second sub-module 100b are electrically connected to each other. Specifically, the outermost first electrode leads 130a2 and 130a3 located at the other end of the first sub-module 100a are electrically connected to the outermost second electrode leads 130b1 and 130b5 located at one end of the second sub-module 100b.

In this case, the electrode leads except the outermost first electrode leads 130a2 and 130a3 and the outermost second electrode leads 130b1 and 130b5 can be electrically connected to adjacent electrode leads, respectively. More specifically, at the other end of the first sub-module 100a, the first electrode leads except the outermost first electrode leads 130a2 and 130a3 can be electrically connected while forming a pair with adjacent first electrode leads. Similarly, even at one end of the second sub-module 100b, the second electrode leads except the outermost second electrode leads 130b1 and 130b5 can be electrically connected while forming a pair with adjacent second electrode leads.

At one end of the first sub-module 100a that is not the connection area Ac, the remaining first electrode leads, except the first outermost electrode lead 130a1 and the first electrode lead 130a6 adjacent thereto, which are electrically connected to an external power source, can be electrically connected to adjacent first electrode leads. In one example, the adjacent first electrode leads can be electrically connected while forming a pair.

At the other end of the second sub-module 100b that is not the connection area Ac, adjacent second electrode leads may be electrically connected. In one example, adjacent second electrode leads may be electrically connected while forming a pair. Herein, the second outermost electrode leads 130b2 and 130b4 of the second sub-module 100b may also be electrically connected while forming a pair with adjacent second electrode leads.

As described above, when the electrical connection of the electrode leads 130a and 130b is formed, electrical current can move along the electrical connection of these electrode leads 130a and 130b.

That is, the arrows in this figure indicate the flow of current, but the flow of current is not limited to those described in this figure, and anything is possible if a person skilled in the art can easily change the current flow by changing the electrical connections of the electrode leads.

Referring again to FIGS. 6 to 8, in this case, the flame preventing member 700 can be located between the first sub-module 100a and the second sub-module 100b without being in contact with the outermost first electrode leads 130a2 and 130a3 and the outermost second electrode leads 130b1 and 130b5.

That is, only the outermost first electrode leads 130a2 and 130a3 and the outermost second electrode leads 130b1 and 130b5 are electrically connected to each other, and therefore, even if the flame preventing member 700 is located between the first sub-module 100a and the second sub-module 100b, their electrical flow may not be interrupted or disturbed.

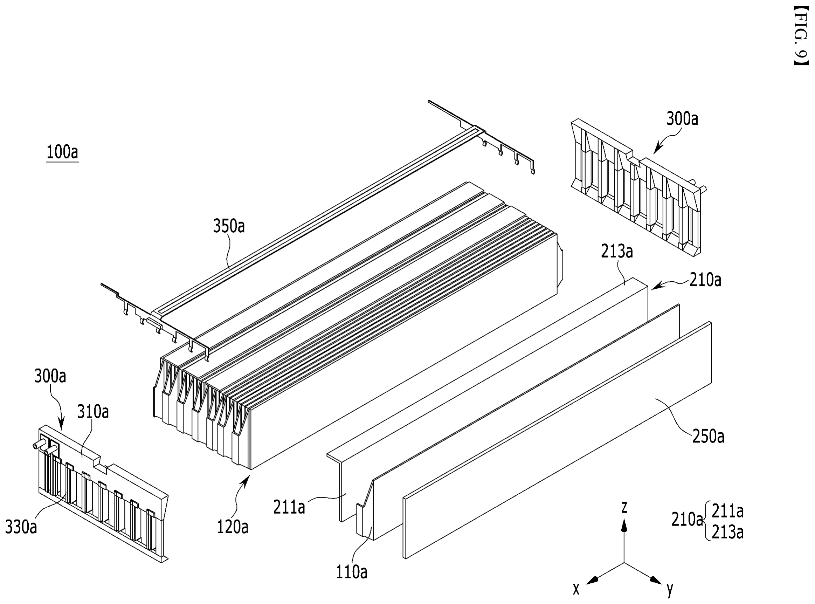

FIG. 9 is an exploded perspective view of a sub-module according to an embodiment of the present disclosure.

As described above, since the first sub-module 100a and the second sub-module 100b each include the same configuration, only the first sub-module 100a will be described below.

Referring to FIG. 9, the first sub-module 100a includes a first battery cell stack 120a in which a plurality of battery cells are stacked, a first busbar assembly 300a that covers the front surface (x-axis direction) and the rear surface (-x-axis direction) of the first battery cell stack 120a, and a first flexible printed circuit board (FPCB) 350a electrically connected to the first busbar assembly 300a.

The first battery cell stack 120a is formed by stacking a plurality of first battery cells 110a. The first battery cell stack 120a includes a first compression pad 250a provided on one surface of the first outermost battery cell 110a. The first battery cell stack 120a also includes a first cooling fin 210a located between the plurality of first battery cells 110a and between the first battery cell 110a and the first compression pad 250a.

The first cooling fin 210a may be located between a plurality of first battery cells 110a. For example, the first cooling fin 210a may be located between two first battery cells 110a. Specifically, another first cooling fin 210a adjacent to one first cooling fin 210a may be located with the two first battery cells 110a interposed between them. Alternatively, the first cooling fin 210a may be located between the outermost first battery cell 110a and the first compression pad 250a.

In this case, the first cooling fin 210a may include a cooling plate 211a in contact with one side surface of the first battery cell 110a. Herein, the one side surface of the first battery cell 110a may be one surface of the battery cell 110 that extends along the longitudinal direction (x-axis direction) of the first battery cell 110a. One surface of the cooling plate 211a may be in contact with one surface of the first battery cell 110a that faces one surface of the cooling plate 211a.

The other surface of the cooling plate 211a may be in contact with one surface of another adjacent first battery cell 110a or one surface of the first compression pad 250a while facing the other surface of the cooling plate 211a. In this case, although not shown in the figure, an adhesive is interposed between the side surface of the first battery cell 110a and the cooling plate 211a, or between one surface of the first compression pad 250a and the cooling plate 211a, so that the first battery cell 110a and the cooling plate 211a can be adhesively fixed. For example, the adhesive may be an insulating tape.

The upper surface (z-axis direction) of the cooling plate 211a can be in contact with the upper surface (z-axis direction) of the module frame 200 of FIG. 5, and the lower surface (-z-axis direction) of the cooling plate 211a can be in contact with the lower surface (-z-axis direction) of the module frame 200 of FIG. 5. Therefore, the first cooling fin 210a can be fixed and located within the module frame 200, and thereby the first battery cell 110a attached to the first cooling fin 210a can also be fixed and located within the module frame 200.

The size of the cooling plate 211a may be larger than the size of the first battery cell 110a. That is, the height (z-axis direction) of the cooling plate 211a may be larger than the height of the first battery cell 110a. In this case, the first battery cell 110a may be attached onto the cooling plate 211a and located as if it floats in the inside of the module frame without contacting the module frame. Specifically, the upper part and the lower part of the first battery cell 110a may be located while having a prescribed height from the upper part and the lower part of the module frame 200. More specifically, when the height (z-axis direction) of the cooling plate 211a is higher than the height (z-axis direction) of the first battery cell 110a, the first battery cell 110a may be located at the central part of the cooling plate 211a and adhesively fixed thereto.

The first cooling fin 210a may further include a cooling plate 211a and a cooling fin protrusion part 213a in which one end of the cooling plate 211a protrudes.

The cooling fin protrusion part 213a may be an area that protrudes in a direction perpendicular to the cooling plate 211a. The cooling fin protrusion part 213a may be in contact with the upper surface of the module frame 200 of FIG. 5. Specifically, one surface of the cooling fin protrusion part 213a may be in contact with the upper surface of the module frame 200 of FIG. 5, and the other surface of the cooling fin protrusion part 213a may be located while facing the upper surface of the first battery cell 110a. In one example, the first cooling fin 210a may be L-shaped. Consequently, the first cooling fin 210a may be more firmly fixed and located within the module frame 200.

However, the shape of the first cooling fin 210a is not limited to those illustrated in this figure, and may be a flat plate shape. That is, the first cooling fin 210a may have any shape as long as it can fix the first battery cell 110a while being in contact with the first battery cell 110a. For example, the cooling fin protrusion part 213a may protrude from the other end of the cooling plate 211a to contact the lower surface of the module frame, and may be located while facing the lower surface of the first battery cell 110a. Alternatively, the cooling fin protrusion part 213a may be formed so as to protrude from both one end and the other end of the cooling plate 211a.

The first cooling fin 210a may be a metal. Specifically, the first cooling fin 210a may be a metal having high thermal conductivity. Therefore, the first cooling fin 210a can directly receive transfer of heat generated from the first battery cell 110a due to charging and discharging of the battery. When heat is generated, a primary cooling may be performed while heat being transferred to the first cooling fin 210a in contact with the side surface of the first battery cell 110a, and the coolant may be in direct contact with the upper part and the lower part of the first battery cell 110a to perform a secondary cooling. Thereby, direct cooling is possible even for the upper edge and lower edge areas of the battery cell, which were relatively difficult to cool in a conventional case, thereby improving the cooling efficiency of the battery.

The first compression pad 250a may be located at the outermost part of the first battery cell stack 120a. When the first battery cell 110a swells due to charging and discharging, the first compression pad 250a may play a role in absorbing the swelling. Specifically, the first compression pad 250a may push the side surface of the module frame 200 of FIG. 5 while the first battery cell 110a is swelling, thereby preventing the battery case of the first battery cell 110a from being cracked, and thus improving the safety of the battery.

However, the first compression pad 250a is not limited to being located only on the outermost part of the first battery cell stack 120a, and may also be located between the first battery cells 110a constituting the first battery cell stack 120a.

The first busbar assembly 300a includes a first busbar frame 310a, and a first busbar 330a mounted on the first busbar frame 310a.

The first busbar frame 310a may be located on one surface of the first battery cell stack 120a to cover one surface of the first battery cell stack 120a and, at the same time, guide the connection between the first battery cell stack 120a and an external device. The first busbar frame 310a may be located on the front surface (x-axis direction) and the rear surface (-x-axis direction) of the first battery cell stack 120a. A first busbar 330a may be mounted on the first busbar frame 310a. Specifically, the inner surface of the first busbar frame 310a may be connected to the front surface (x-axis direction) and the rear surface (-x-axis direction) of the first battery cell stack 120a, and the outer peripheral surface of the first busbar frame 310a may be connected to the first busbar 330a.

The first busbar frame 310a may include an electrically insulating material. The first busbar frame 310a may limit contact of the first busbar 330a with other portions of the first battery cells 110a other than the portion joined with an electrode lead (not shown), and may also prevent occurrence of an electrical short circuit.

The first busbar 330a is mounted on one surface of the first busbar frame 310a, and may electrically connect the first battery cell stack 120a or the first battery cells 110a to an external device circuit. The first busbar 330a is located on the first busbar frame 310a, and the first busbar assembly 300a is covered by the sealing assembly 400 and the end plate 500 of FIG. 5, so that it can be protected from external impacts, etc., and the deterioration of the battery durability due to external moisture, etc. can be minimized.

The first busbar 330a can be electrically connected to the first battery cell stack 120a via the electrode lead of the first battery cell 110a. Specifically, the electrode lead of the first battery cell 110a may pass through a slit formed in the first busbar frame 310a and then be bent to connect to the first busbar 330a. The first battery cells 110a constituting the first battery cell stack 120a can be connected in series or in parallel by the first busbar 330a.

The first flexible printed circuit board 350a extends in the longitudinal direction of the first battery cell stack 120a, and is mounted on one surface of the first battery cell stack 120a to sense the first battery cell 110a. Specifically, the first flexible printed circuit board 350a can be located while being in contact with a battery cell located at the central part of the first battery cell stack 120a among the battery cells forming the first battery cell stack 120a. The first flexible printed circuit board 350a senses electrical and thermal data of the first battery cell 110a while being seated on the upper surface (z-axis direction) of the first battery cell stack 120a. In addition, the first flexible printed circuit board 350a is electrically connected to the first busbar 330a while being bent toward the first busbar frame 310a at the end of the first battery cell stack 120a.

Next, the flame preventing member 700 provided between the first sub-module 100a and the second sub-module 100b will be described in more detail.

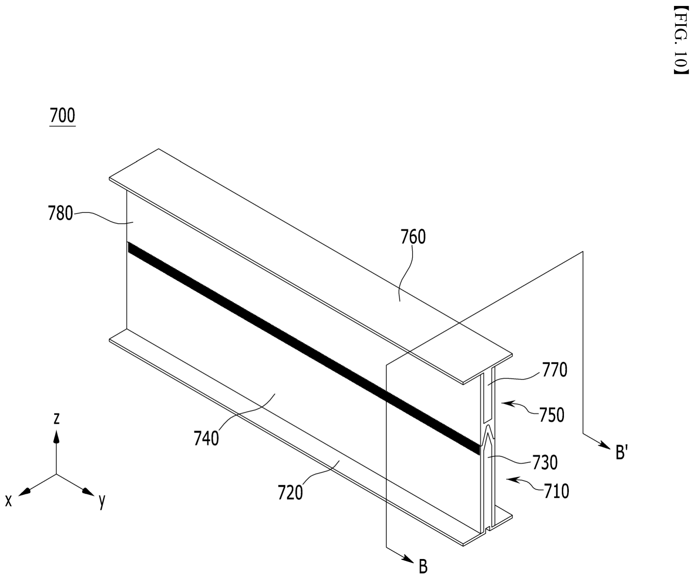

FIG. 10 is a perspective view of a flame preventing member according to an embodiment of the present disclosure.

Referring to FIG. 10, a flame preventing member 700 according to an embodiment of the present disclosure includes a first flame preventing member 710 and a second flame preventing member 750.

The first flame preventing member 710 and the second flame preventing member 750 are located between the first sub-module and the second sub-module while being coupled to each other, thereby capable of preventing flames, and the like generated in one sub-module from moving to adjacent sub-modules.

Specifically, the first flame preventing member 710 can be located while being in contact with the lower surface (-z-axis direction) of the module frame 200 (FIG. 5).

The first flame preventing member 710 includes first plates 720 and 730 located while being in contact with the lower surface of the module frame. Specifically, the first flame preventing member 710 includes a first support plate 720 located while being in contact with the lower surface of the module frame, and a first prevention plate 730 protruded in a surface perpendicular to the first support plate 720.

In this case, the first plates 720 and 730 may be provided with a first insulating member 740. Specifically, the outer peripheral surface of the first prevention plate 730 facing the first sub-module and the second sub-module may be provided with a first insulating member 740 to maintain insulation property between the first sub-module and the second sub-module. The first insulating member 740 may be located while covering the entire outer peripheral surface of the first prevention plate 730.

The second flame preventing member 750 may be located while being in contact with the upper surface (z-axis direction) of the module frame 200 (FIG. 5).

The second flame preventing member 750 includes second plates 760 and 770 located while being in contact with the upper surface of the module frame. Specifically, the first flame preventing member 710 includes a second support plate 760 located while being in contact with the upper surface of the module frame, and a second prevention plate 770 protruded in a surface perpendicular to the second support plate 760.

In this case, the second plates 760 and 770 may be provided with a second insulating member 780. The outer peripheral surface of the second prevention plate 770 facing the first sub-module and the second sub-module may be provided a second insulating member 780 to maintain insulation property between the first sub-module and the second sub-module. The second insulating member 780 may be located while covering the entire outer peripheral surface of the second prevention plate 770.

The first flame preventing member 710 and the second flame preventing member 750 can be joined in the mutually meshed state to form a single flame preventing member 700.

Specifically, the other end of the first prevention plate 730 of the first flame preventing member 710, and the other end of the second prevention plate 770 of the second flame preventing member 750 can be joined in the mutually meshed state. More specifically, a first insulating member 740 located while covering the outer peripheral surface of the first prevention plate 730 and a second insulating member 780 located while covering the outer peripheral surface of the second prevention plate 770 can be joined in the mutually meshed state.

Next, the first flame preventing member 710 and the second flame preventing member 750 will be described in more detail.

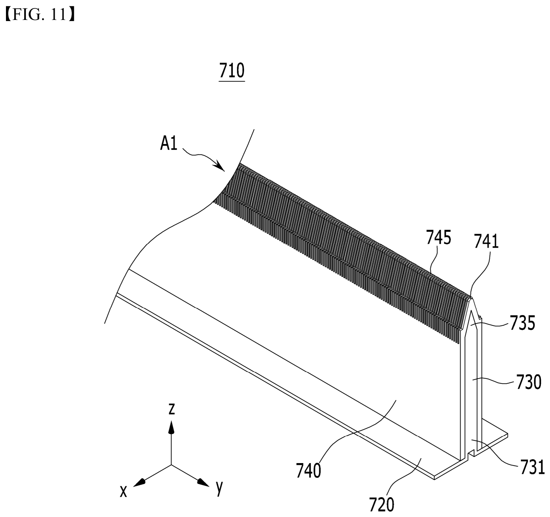

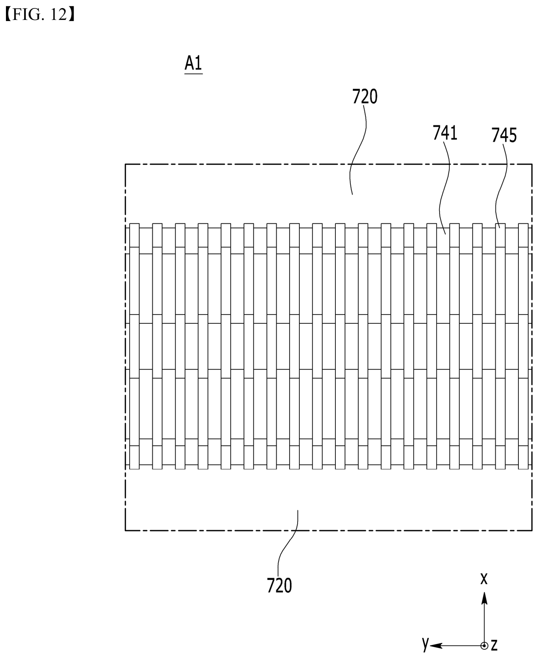

FIG. 11 is a perspective view of a first flame preventing member according to an embodiment of the present disclosure. FIG. 12 is a diagram illustrating section A1 of FIG. 11.

Referring to FIGS. 5, 7, 11 and 12, a first flame preventing member 710 according to an embodiment of the present disclosure includes first plates 720 and 730, and a first insulating member 740 located while covering an outer peripheral surface of the first prevention plate 730.

The first plates 720 and 730 may include a first support plate 720, and a first prevention plate 730 protruded from the first support plate 720.

The first support plate 720 may be located while being in contact with the lower surface (-z-axis direction) of the module frame 200, so that the first flame preventing member 710 may be fixed and located within the module frame 200. Specifically, one surface of the first support plate 720 may be adhesively fixed and located onto the lower surface of the module frame 200.

The first prevention plate 730 may be a plate that protrudes and extends in a surface perpendicular to the first support plate 720. The first prevention plate 730 may be a plate that extends from the first support plate 720 in the opposite direction (z-axis direction) to the lower surface of the module frame 200 in contact with the first support plate 720.

The first prevention plate 730 may have a surface that is sharper as it extends from the first support plate 720. That is, the first prevention plate 730 includes one end 731 in contact with the first support plate 720 and the other end 735 extended therefrom. Herein, the other end 735 of the first prevention plate 730 may be formed so as to have a sharper surface than the one end 731 of the first prevention plate 730. In other words, the other end 735 of the first prevention plate 730 may be formed in a shape that narrows in the width (x-axis direction) as it extends from the one end 731 of the first prevention plate 730 in the upper direction (z-axis direction) of the module frame 200.

The height (z-axis direction) of the first prevention plate 730 may be the distance from one end 731 of the first prevention plate 730 to the other end 735. In this case, the height of the first prevention plate 730 may be lower than the height (z-axis direction) of the first sub-module 100a and the second sub-module 100b.

The first support plate 720 and the first prevention plate 730 may be formed of metal. For example, the first support plate 720 and the first prevention plate 730 may be formed of aluminum(Al). Therefore, the first support plate 720 and the first prevention plate 730 may improve the mechanical rigidity of the battery module 100 according to the present disclosure. Further, a partial area of the first support plate 720 may be in contact with the coolant circulating inside the battery module 100, thereby cooling the coolant and improving the cooling performance of the battery module 100.

A first insulating member 740 may be located on the outer peripheral surface of the first plate. Specifically, a first insulating member 740 may be located on the outer peripheral surface of the first prevention plate 730. More specifically, the first insulating member 740 may be located while covering the entire outer peripheral surface of the first prevention plate 730 facing the first sub-module 100a and the second sub-module 100b. At this time, the first insulating member 740 may be provided while having a shape corresponding to the first prevention plate 730.

In this figure, the first insulating member 740 is depicted as being located while covering only the outer peripheral surface of the first prevention plate 730 facing the first sub-module 100a and the second sub-module 100b, but is not limited thereto, and may be located in any shape that can be easily changed from the perspective of a person skilled in the art. For example, the first insulating member 740 may be located while covering one surface of the first support plate 720 connected to the first prevention plate 730.

The first insulating member 740 may include an electrically insulating material. Therefore, even if the first prevention plate 730 comes into contact with the battery cell stacks 120a and 120b or the busbar assemblies 300a and 300b constituting the first sub-module 100a and the second sub-module 100b, electrical insulation property is maintained between them, thereby capable of ensuring the safety of the battery.

The first insulating member 740 is provided while wholly covering from one end 731 of the first prevention plate 730 to the other end 735 of the first prevention plate 730. At this time, the first insulating member 740 includes a first recessed part 741 and a first protrusion part 745 located closer to the other end 735 of the first prevention plate 730 than the one end 731 of the first prevention plate 730, which may be of protrusion structures. In the first insulating member 740, the area where the first recessed part 741 and the first protrusion part 745 are located may be defined as a first area A1.

Specifically, in the first recessed part 741 and the first protrusion part 745 of the first insulating member 740, the first protrusion part 745 may function as a protrusion. At this time, the first recessed part 741 and the first protrusion part 745 may be formed in an area closer to the other end 735 of the first prevention plate 730 than one end 731 of the first prevention plate 730.

The first recessed part 741 refers to an area where one surface of the first insulating member 740 is concavely recessed. Specifically, the first recessed part 741 may be an area having a height lower than the height of the first insulating member 740. Herein, the height of the first insulating member 740 may correspond to the thickness of the first insulating member 740.

The first recessed part 741 may be an area where the surface of the first insulating member 740 is partially recessed. That is, as the first recessed part 741 is closer to the other end 735 of the first prevention plate 730, the thickness of the first insulating member 740 forming the first recessed part 741 may become thinner.

In addition, although not disclosed in the figure, the first recessed part 741 may include an area where the first plates 720 and 730 is partially exposed. Specifically, the first recessed part 741 may include an area where the other end 735 of the first prevention plate 730 is partially exposed. In this case, the coolant may transfer heat possessed by the coolant to the first prevention plate 730 while being in contact with the other end 735 of the first prevention plate 730 exposed to the first recessed part 741. That is, the heat possessed by the coolant passing through the first sub-module 100a may transfer to the other end 735, thereby cooling the coolant, and the coolant in a cooled state may move to the second sub-module 100b and cool the second sub-module 100b. Therefore, the temperature difference between the first sub-module 100a and the second sub-module 100b can be reduced, the cooling performance of the battery can be improved.

A plurality of the first recessed parts 741 can be formed apart from each other at regular intervals. A plurality of the first recessed parts 741 can be formed apart from each other with the first protrusion part 745 interposed between them.

The first protrusion part 745 means one area of the first insulating member 740 that protrudes compared to the first recessed part 741. Specifically, the first protrusion part 745 can be an area that has the same height as the height of the first insulating member 740 and is higher than the first recessed part 741.

The first protrusion part 745 can maintain the same height even though it approaches the other end 735 of the first prevention plate 730 of the first insulating member 740. That is, the first protrusion part 745 can have the same height regardless of the position where the first protrusion part 745 is provided.

A plurality of the first protrudin parts 745 can be formed apart from each other at regular intervals. A plurality of the first protrusion parts 745 can be formed apart from each other with the first recessed part 741 interposed between them.

The first recessed part 741 and the first protrusion part 745 can form a protrusion structure while having a height difference from each other. Therefore, when the coolant passes through the flame preventing member 700 within the battery module 100, the coolant can move while passing between the first recessed part 741 and the first protrusion part 745.

In this case, the protrusion structure formed by the first recessed part 741 and the first protrusion part 745 may cause turbulence in the coolant. In detail, while the coolant passes between the first recessed part 741 and the first protrusion part 745 of the protrusion structure, a coolant in a laminar flow state is changed into a coolant in a turbulent flow state, so that the heat transfer coefficient of the coolant can be improved. Therefore, since the coolant moves from the first sub-module 100a to the second sub-module 100b in a state improved in heat transfer efficiency, the temperature difference between the sub-modules 100a and 100b can be eliminated, and the cooling performance of the battery can be improved.

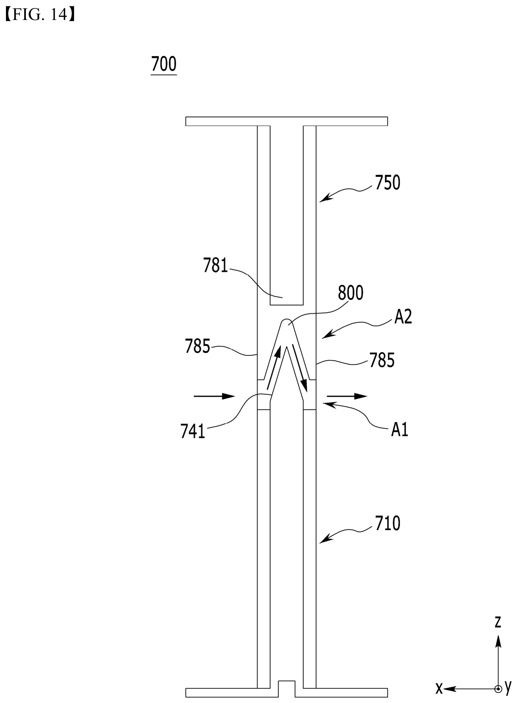

The movement of the coolant through the first recessed part 741 will be described in more detail later in FIG. 14.

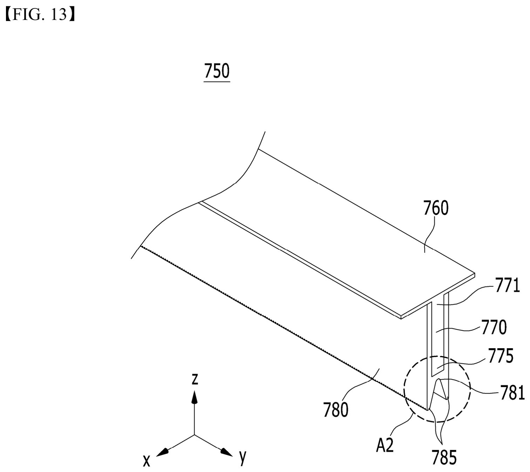

FIG. 13 is a perspective view of a second flame preventing member according to an embodiment of the present disclosure.

Referring to FIGS. 5, 7 and 13, a second flame preventing member 750 according to an embodiment of the present disclosure includes second plates 760 and 770 and a second insulating member 780 located while covering an outer peripheral surface of the second plates 760 and 770.

The second plates 760 and 770 may include a second support plate 760 and a second prevention plate 770 protruded from the second support plate 760.

The second support plate 760 may be located while being in contact with the upper surface (z-axis direction) of the module frame 200, and the second flame preventing member 750 may be fixed and located within the module frame 200. Specifically, one surface of the second support plate 760 may be located while being adhesively fixed to the upper surface (z-axis direction) of the module frame 200.

The second prevention plate 770 may be a plate that protrudes and extends in a surface perpendicular to the second support plate 760. The second prevention plate 770 may be a plate that extends from the second support plate 760 in an opposite direction (-z-axis direction) to the upper surface (z-axis direction) of the module frame 200 in contact with the second support plate 760.

The second prevention plate 770 includes one end 771 in contact with the second support plate 760 and the other end 775 extended therefrom. In this case, the height (z-axis direction) of the second prevention plate 770 may be the distance from one end 771 of the second prevention plate 770 to the other end 775, and the height (z-axis direction) of the second prevention plate 770 may be lower than the height (z-axis direction) of the first sub-module 100a and the second sub-module 100b.

The second support plate 760 and the second prevention plate 770 may be formed of metal. For example, the second support plate 760 and the second prevention plate 770 may be formed of aluminum (Al). Therefore, the second support plate 760 and the second prevention plate 770 may improve the mechanical rigidity of the battery module 100 according to the present disclosure. In addition, a partial area of the second support plate 760 may be in contact with the coolant circulating in the inside of the battery module 100, thereby cooling the coolant and improving the cooling performance of the battery module 100.

A second insulating member 780 may be located on the outer peripheral surface of the second plates 760 and 770. Specifically, a second insulating member 780 may be located on the outer peripheral surface of the second prevention plate 770. More specifically, the second insulating member 780 may be located while covering the entire outer peripheral surface of the second prevention plate 770 facing the first sub-module 100a and the second sub-module 100b.

In this figure, the second insulating member 780 is illustrated as being located while covering only the outer peripheral surface of the second prevention plate 770 facing the first sub-module 100a and the second sub-module 100b, but is not limited thereto, and may be located in any shape that can be easily changed from the perspective of a person skilled in the art. For example, the second insulating member 780 may be located while covering one surface of the second support plate 760 connected to the second prevention plate 770.

The second insulating member 780 is located while wholly covering from one end 771 of the second prevention plate 770 to the other end 775 of the second prevention plate 770. At this time, the second insulating member 780 includes a second recessed part 781 and a second protrusion part 785 located closer to the other end 775 of the second prevention plate 770 than the one end 771 of the second prevention plate 770. At this time, in the second insulating member 780, the area where the second recessed part 781 and the second protrusion part 785 are located can be defined as the second area A2.

The second recessed part 781 can be an area in which one surface of the second insulating member 780 is partially recessed. The second recessed part 781 may be an area where the surface of the second insulating member 780 is partially recessed. The second recessed part 781 may be an area of the second insulating member 780 that is relatively recessed than the second protrusion part 785. Specifically, the second recessed part 781 may be an area of the second insulating member 780 that is recessed toward the other end 775 of the second prevention plate 770.

The second recessed part 781 may be located between the second protrusion parts 785. The second recessed part 781 may be located between two second protrusion parts 785. In this case, the second recessed part 781 may be V-shaped.

The second protrusion part 785 refers to an area of the second insulating member 780 that protrudes compared to the second recessed part 781. Specifically, the second protrusion part 785 may be an area of the second insulating member 780 that protrudes in a more extended form from the other end 775 of the second prevention plate 770. The second protrusion part 785 may have a surface that is sharper as it extends from the other end 775 of the second prevention plate 770. In other words, the second protrusion part 785 may be formed in a shape that narrows in width (x-axis direction) as it extends in a direction away from the second recessed part 781. That is, the second protrusion part 785 extends in a direction away from the other end 775 of the second prevention plate 770 and the second recessed part 781, and the thickness of the second insulating member 780 constituting the second protrusion part 785 may become thinner.

The second protrusion part 785 may be provided with the second recessed part 781 interposed between them. The second protrusion part 785 may be formed in two and located with one second recessed part 781 being interposed between them.

The first recessed part 741 and the first protrusion part 745 may be inserted and located between the second protrusion part 785 and the second recessed part 781. This will be described in more detail below with reference to FIG. 14.

The second insulating member 780 may include an electrically insulating material. Therefore, even if the second prevention plate 770 comes into contact with the battery cell stacks 120a and 120b or the busbar assemblies 300a and 300b constituting the first sub-module 100a and the second sub-module 100b, electrical insulation property is maintained between them, thereby ensuring the safety of the battery.

FIG. 14 is a cross-sectional view taken along line B-B' of FIG. 10.

Referring to FIGS. 10 to 14, a flame preventing member 700 according to an embodiment of the present disclosure may be provided in a state in which a first flame preventing member 710 and a second flame preventing member 750 are mutually engaged and joined,

Specifically, the first area A1 of the first flame preventing member 710 in which the first recessed part 741 and the first protrusion part 745 are formed can be inserted and located in the second area A2 of the second flame preventing member 750 in which the second protrusion part 785 and the second recessed part 781 are formed. Specifically, the first area A1 and the second area A2 can be located while being engaged with each other.

More specifically, the first protrusion part 745 of the first area A1 is located while being in contact with the second recessed part 781 and the second protrusion part 785 of the second area A2, so that the first area A1 and the second area A2 can be fixed in a supported state while being engaged with each other. Since the first recessed part 741 of the first area A1 is located while having a prescribed distance from the second recessed part 781 and the second protrusion part 785 of the second area A2, a movement path 800 that allows the coolant to move between the first protrusion part 745 and the second area A2 can be formed.

That is, a movement path 800 through which coolant can move can be formed between the first area A1 and the second area A2. The movement path 800 can correspond to the shape of the first area A1 and the second area A2. In other words, a movement path 800 through which coolant moves can be formed between the first recessed part 741, the second recessed part 781, and the second protrusion part 785. The movement path 800 can correspond to the shape of the first recessed part 741 of the first area A1.

The coolant can move through the first recessed part 741 of the first area A1. The coolant can move between the first recessed part 741 of the first area A1 and the second recessed part 781 and the second protrusion part 785 of the second area A2. For reference, the arrows illustrated in this figure are the movement directions of the coolant.

Therefore, similarly to the movement path 800 illustrated in this figure, a turbulent flow of the coolant may occur due to the coolant moving along the movement path 800 of the lattice protrusion structure. The coolant in a turbulent flow state may have an improved heat transfer coefficient compared to the laminar flow state, and thus may move within the battery module in a state improved in heat transfer efficiency, thereby improving the cooling efficiency of the battery. In addition, the temperature difference between the first sub-module and the second sub-module located with the flame preventing member 700 interposed between them may be reduced.

Further, although not disclosed in the figure, the first insulating member 740 constituting the first recessed part 741 may have a shape in which a portion is more recessed, and thus the first prevention plate 730 may be partially exposed on the movement path 800. In this case, the coolant becomes turbulent flow while moving through the movement path 800 and, at the same time, transfers heat possessed by the coolant to the first prevention plate 730 while being in contact with the first prevention plate 730, which may cause a partial drop in the temperature of the coolant. That is, the coolant, which has been partially cooled while moving through the movement path 800, moves within the battery module, thereby capable of further improving the cooling performance of the battery module, and at the same time, reducing the temperature difference between the first sub-module and the second sub-module located with the flame preventing member 700 interposed between them.

Th overall height (z-axis direction) of the flame preventing member 700 may correspond to the height (z-axis direction) of the module frame 200 (FIG. 5) in which the flame preventing member 700 is provided. Specifically, the overall height of the flame preventing member 700 may be equal to the height of the upper inner surface of the module frame 200 and the lower inner surface of the module frame 200. Therefore, the flame preventing member 700 may be a configuration that partitions the inside of the battery module.

When a flame occurs in one sub-module, the flame may move along the coolant. At this time, since the flame preventing member 700 is located in the movement path of the coolant within the battery module, the flame preventing member 700 may prevent the flame from being transmitted to other adjacent sub-modules.

That is, within the battery module, the flame preventing member 700 serves to move only the coolant through the movement path 800 to the area where the adjacent sub-module is located, and prevent the flame from being propagated, thereby preventing the occurrence of a chain of explosions within the battery module. Therefore, the safety of the battery can be improved.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

### [Description of Reference Numerals]

100: battery module
100a: first sub-module
100b: second sub-module
110: battery cell
120: battery cell stack
300: busbar assembly
700: flame preventing member
710: first flame preventing member
720: first support plate
730: first prevention plate
740: first insulating member
750: second flame preventing member
760: second support plate
770: second prevention plate
780: second insulating member

## Claims

1. A battery module comprising:
a first sub-module and a second sub-module each including a battery cell stack in which a plurality of battery cells are stacked;
a module frame in which the first sub-module and the second sub-module are housed; and
a flame preventing member located between the first sub-module and the second sub-module,
wherein one end of the first sub-module and the other end of the second sub-module are electrically connected to each other.

2. The battery module according to claim 1, wherein:
the flame preventing member comprises,
a first flame preventing member located while being in contact with a lower surface of the module frame, and
a second flame preventing member located while being in contact with an upper surface of the module frame.

3. The battery module according to claim 2, wherein:
the first flame preventing member and the second flame preventing member are coupled and located while being engaged with each other.

4. The battery module according to claim 2, wherein:
the first flame preventing member comprises,
a first plate in contact with the lower surface of the module frame, and a first insulating member located while covering an outer peripheral surface of the first plate, and
the second flame preventing member comprises,
a second plate in contact with the upper surface of the module frame, and a second insulating member located while covering an outer peripheral surface of the second plate.

5. The battery module according to claim 4, wherein:
the first insulating member comprises,
a first recessed part, which is one area where one surface of the first insulating member is recessed, and a first protrusion part, which is one area of the first insulating member that is protruded compared to the first recessed part, and
the second insulating member comprises,
a second recessed part, which is one area where one surface of the second insulating member is recessed, and a second protrusion part, which is one area of the second insulating member that is protruded compared to the second recessed part.

6. The battery module according to claim 5, wherein:
a first area where the first recessed part and the first protrusion part are located,
are inserted and located in a second area where the second recessed part and the second protrusion part are located.

7. The battery module according to claim 5, wherein:
the first protrusion part is located while being in contact with the second protrusion part and the second recessed part.

8. The battery module according to claim 5, wherein:
the first recessed part is located while maintaining a prescribed distance from the second protrusion part and the second recessed part.

9. The battery module according to claim 8, wherein:
a movement path through which a coolant moves is formed between the first recessed part, the second protrusion part and the second recessed part.

10. The battery module according to claim 9, wherein:
the movement path corresponds to a shape of the first recessed part.

11. The battery module according to claim 5, wherein:
the first plate includes a first support plate located while being in contact with the lower surface of the module frame, and a first prevention plate protruded in a surface perpendicular to the first support plate,
the first prevention plate includes one end in contact with the first support plate, and the other end extended therefrom, and
the first recessed part and the first protrusion part are provided in an area which is closer to the other end of the first prevention plate than the one end of the first prevention plate.

12. The battery module according to claim 5, wherein:
the second plate includes a second support plate located while being in contact with the upper surface of the module frame, and a second prevention plate protruded in a surface perpendicular to the second support plate,
the second prevention plate includes one end in contact with the second support plate, and the other end extended therefrom, and
the second recessed part and the second protrusion part are provided in a second area which is an area closer to the other end of the second prevention plate than the one end of the second prevention plate.

13. The battery module according to claim 5, wherein:
the first recessed parts are formed in plurality and spaced apart from each other with the first protrusion part therebetween.

14. The battery module according to claim 5, wherein:
the first recessed part and the first protrusion part have a protrusion structure, wherein the first protrusion part functions as a protrusion.

15. The battery module according to claim 5, wherein:
the second recessed part is located between the two second protrusion parts, and
the second protrusion part extends in a direction away from the second recessed part, so that a thickness of the second insulating member becomes thinner.

16. The battery module according to claim 5, wherein:
the first recessed part includes an area where the first plate is partially exposed.

17. The battery module according to claim 1, wherein:
the first sub-module and the second sub-module further comprise a busbar assembly including a busbar electrically connected to the battery cell stack and a busbar frame covering the battery cell stack on at least one side.

18. A battery pack comprising the battery module according to claim 1.
